# EUROPEAN PATENT APPLICATION

(11) **EP 1 827 052 A2**
(43) Date of publication of application: **29.08.2007**
(21) Application number: 07102627.2
(22) Date of filing: 19.02.2007
(51) Int. Cl.: H04Q 7/38

(54) **System and method for updating an active base station set in a communication system**

(30) Priority: 22.02.2006 KR 20060017362
(71) Applicant: Samsung Electronics Co., Ltd., Suwon-si, Gyeonggi-Do (KR)
(72) Inventor: Park Young-Sam, Gyeonggi-do (KR); Lim, Ae-Ri, Gyeonggi-do (KR); Lee, Kang-Gyu, Gyeonggi-do (KR); Park, Yun-Sang, Gyeonggi-do (KR)
(74) Representative: Zimmer, Franz-Josef

(57) **Abstract**

In a communication system, a Base Station (BS) transmits a BS diversity set, or the BS diversity set and a BS recommended set to a Mobile Station (MS), and generates a temporary BS diversity set including BSs which are included in the BS diversity set and the BS recommended set, thereby enabling Fast Base Station Switching (FBSS) handover even though diversity set discrepancy between the BS and MS occurs.

## Description

### BACKGROUND OF THE INVENTION

### 1. Field of the Invention

The present invention generally relates to a communication system, and in particular, to a system and method for updating a diversity set between a serving anchor Base Station (BS) and a Mobile Station (MS).

### 2. Description of the Related Art

In a next generation communication system, active resource is being conducted to provide users with high-rate services having various Quality-of Services (QoSs). A wireless Local Area Network (LAN) communication system and a wireless Metropolitan Area Network (MAN) communication system support a high data rate. A wireless MAN communication system, which is a Broadband Wireless Access (BWA) communication system, has a broader service area and supports a greater data rate, compared with a wireless LAN communication system. Therefore, a next generation communication system is evolving to guarantee mobility and QoS for a wireless LAN communication system and a wireless MAN communication system supporting a relatively high data rate.

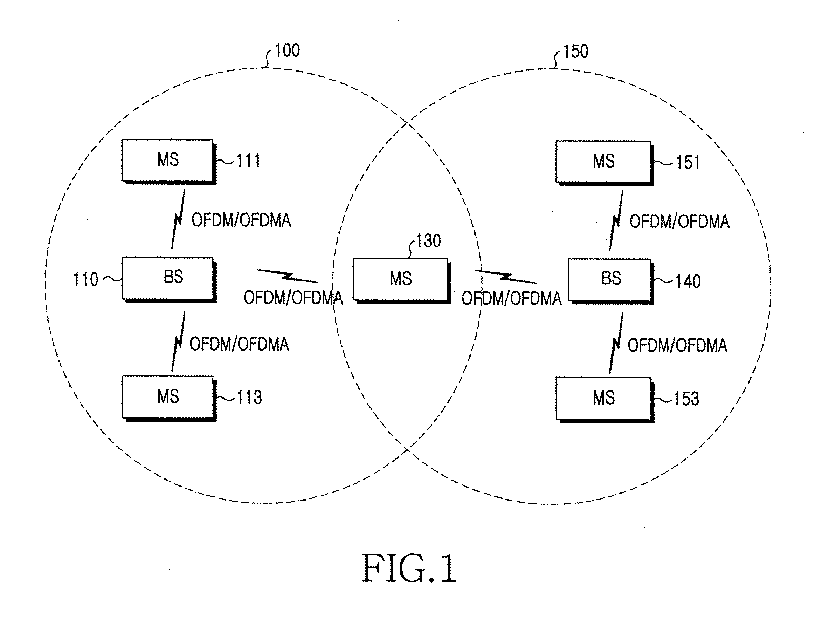

An Institute of Electrical and Electronics Engineers (IEEE) 802.16e communication system is a typical one of communication systems employing Orthogonal Frequency Division Multiplexing (OFDM) scheme or Orthogonal Frequency Division Multiple Access (OFDMA) scheme to support a broadband transmission network for physical channels of the wireless MAN communication system. With reference to FIG 1, a description will now be made of a configuration of the IEEE 802.16e communication system.

FIG 1 shows a general IEEE 802.16e communication system which has a multi-cell configuration, i.e. has a cell 100 and a cell 150, and includes a BS 110 for managing the cell 100, a BS 140 for managing the cell 150, and a plurality of MSs 111, 113, 130, 151 and 153. Signal exchange between the BSs 110 and 140, and the MSs 111, 113, 130, 151 and 153 is achieved using OFDM/OFDMA.

A description will now be made of Fast Base Station Switching (FBSS) scheme, one of various schemes for performing connection switching, i.e. handover, from a serving BS to a target BS in the IEEE 802.16e communication system. For convenience, an FBSS-based handover will be referred to as an "FBSS handover."

An FBSS handover uses selection diversity and a fast switching mechanism to improve link quality. During an FBSS handover, an MS exchanges signals only with one active BS, i.e. an anchor BS, among active BSs existing in a diversity set of the MS. The anchor BS is a kind of serving BS, and is changeable according to a BS selection scheme of the MS. A description will now be made of a diversity set.

Each of active BSs constituting a diversity set is identified with a Temporary Base Station Indicator (Temp BS ID), and all active BSs constituting the diversity set share capability of a corresponding MS, security parameters, service parameters, and full Medium Access Control (MAC) context information. Each of the active BSs constituting the diversity set can be excluded from the diversity set according to strength of a signal received from each active BS, or a new BS not constituting the diversity set can be added as a new active BS constituting the diversity set.

The MS selects any one of the active BSs constituting the diversity set as an anchor BS. Strength, for example, Carrier-to-Interference and Noise Ratio (CINR), of a reference signal, such as a pilot signal, received from the active BS selected as the anchor BS is greater than any CINR of signals transmitted by other active BSs. Therefore, during the FBSS handover, the MS performs communication only with the anchor BS. An anchor BS currently in communication with the MS will be referred to as a "serving anchor BS." The MS, while in communication with the serving anchor BS, measures signal quality for each of the active BSs constituting the diversity set. The phrase "measuring signal quality" refers to measuring a CINR of a corresponding pilot signal. When the MS detects presence of an active BS providing signal quality greater than that of the current serving anchor BS as a result of the signal quality measurement, the MS determines to perform handover to the active BS providing the signal quality greater than that of the current serving anchor BS in the serving anchor BS, thereby performing fast switching. The active BS provides greater signal quality than the current serving anchor BS, and the active BS to which the MS performs fast switching will be referred to as a "target anchor BS."

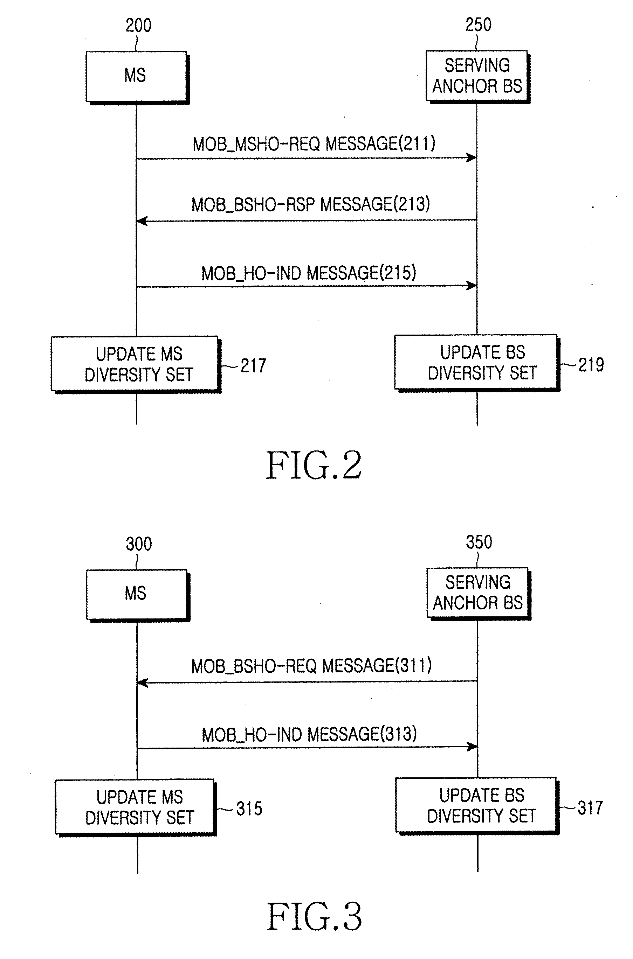

With reference to FIG 2, a description will now be made of an MS-initiated diversity set update process in a general IEEE 802.16e communication system.

An MS 200 performs a diversity set update operation in order to add a neighbor BS that transmits a pilot signal having a CINR greater than or equal to a first CINR threshold H_Add_Threshold, to the diversity set as a new active BS, or to delete from the diversity set an active BS that transmits a pilot signal having a CINR less than or equal to a second CINR threshold H_Delete_Threshold, among the active BSs included in the current diversity set. In order to update the diversity set, the MS 200 transmits an MS Handover Request (MOB_MSHO-REQ) message to a serving anchor BS 250 in step 211. The MOB_MSHO-REQ message includes an MS diversity set, or the MS diversity set and an MS recommended set.

The MS diversity set indicates a diversity set that the MS 200 has already stored therein, and the MS recommended set includes neighbor BSs that the MS 200 desires to add as active BSs. The MOB_MSHO-REQ message includes only the MS diversity set when the MS 200 desires to delete from the MS diversity set a particular active BS among the active BSs included in the MS diversity set. The MS 200 writes a CINR for each of the active BSs included in the MS diversity set together in the MOB_MSHO-REQ message so the serving anchor BS 250 can detect a Delete request for the particular active BS. In addition, the MOB_MSHO-REQ message includes the MS diversity set and the MS recommended set when the MS 200 desires to include in the MS diversity set not only the active BSs included in the MS diversity set, but also particular neighbor BSs. The MS 200 writes, in the MOB_MSHO-REQ message, a CINR for each of the active BSs included in the MS diversity set and a CINR for each of the neighbor BSs included in the MS recommended set so the serving anchor BS 250 can detect an Add request for the neighbor BSs.

Upon receipt of the MOB_MSHO-REQ message, the serving anchor BS 250 transmits a BS Handover Response (MOB_BSHO-RSP) message to the MS 200 in response to the MOB_MSHO-REQ message in step 213. The MOB_BSHO-RSP message includes a BS diversity set, or the BS diversity set and a BS recommended set. The BS diversity set is a diversity set that the serving anchor BS 250 generates depending on the MS diversity set included in the MOB_MSHO-REQ message sent by the MS 200. The BS diversity set may have a format obtained by deleting particular active BSs from the MS diversity set, or may have the same format as the MS diversity set. The BS diversity set is different from the MS diversity set when the serving anchor BS 250 deletes the particular active BSs from the MS diversity set. In addition, the BS recommended set is a diversity set that the serving anchor BS 250 generates depending on the MS recommended set included in the MOB_MSHO-REQ message sent by the MS 200. The BS recommended set may have a format obtained by deleting particular active BSs from the MS recommended set, or may have the same format as the MS recommended set. The BS recommended set is different from the MS recommended set when the serving anchor BS 250 deletes the particular neighbor BSs from the MS recommended set. The BS diversity set and the BS recommended set included in the MOB_BSHO-RSP message are used for the diversity set update only when its mode is 011/100/101/110/111, and the mode is not directly related to the present invention, so a detailed description thereof will be omitted.

Upon receipt of the MOB_BSHO-RSP message, the MS 200 determines whether to accept the BS diversity set, or the BS diversity set and the BS recommended set included in the received MOB_BSHO-RSP message. In step 215, the MS 200 transmits a Handover Indication (MOB_HO-IND) message including the determination result to the serving anchor BS 250. The MOB_HO-IND message includes a MDHOFBSS_IND_TYPE field. The MS 200 can reflect the determination result through the MDHOFBSS_IND_TYPE field, and a detailed description thereof will be given below.

When a field value of the MDHOFBSS_IND_TYPE field is 00 (MDHOFBSS_IND_TYPE=00(confirm)), the MS 200 will accept the BS diversity set, or the BS diversity set and the BS recommended set transmitted by the serving anchor BS 250 through the MOB_BSHO-RSP message. When a field value of the MDHOFBSS_IND_TYPE field is 01 (MDHOFBSS_IND_TYPE=01(cancel)), the MS 200 will cancel the diversity set update process. When a field value of the MDHOFBSS_IND_TYPE field is 10 (MDHOFBSS_IND_TYPE=10((reject)), the MS 200 will reject the BS diversity set, or the BS diversity set and the BS recommended set transmitted by the serving anchor BS 250 through the MOB_BSHO-RSP message. The MDHOFBSS_IND_TYPE field included in the MOB_HO-IND message is used for the diversity set update only when its mode is 0b10, and the mode is not directly related to the present invention, so a detailed description thereof will be omitted.

After transmitting the MOB_HO-IND message to the serving anchor BS 250, the MS 200 updates the MS diversity set according to the determination result in step 217. When the MS 200 has determined to cancel the diversity set update process, the MS diversity set update operation will not be performed. When the MS 200 has determined to reject the BS diversity set, or the BS diversity set and the BS recommended set included in the MOB_BSHO-RSP message, the MS 200 waits for a new MOB_BSHO-RSP message for a predetermined time. For example, the predetermined time can be a time that a T42 timer waits.

Upon receipt of the MOB_HO-IND message, the serving anchor BS 250 updates the BS diversity set for the MS 200 according to the MDHOFBSS_IND_TYPE field value included in the received MOB_HO-IND message in step 219. As the serving anchor BS 250 updates the BS diversity set, the MS diversity set of the MS 200 becomes identical to the BS diversity set of the serving anchor BS 250.

With reference to FIG 3, a description will now be made of a BS-initiated diversity set update process in a general IEEE 802.16e communication system.

When there is a need for diversity set update, a serving anchor BS 350 transmits a BS Handover Request (MOB_BSHO-REQ) message to an MS 300 in step 311. The MOB_BSHO-REQ message also includes a BS diversity set, or the BS diversity set and a BS recommended set. The BS diversity set, or the BS diversity set and the BS recommended set included in the MOB_BSHO-REQ message are used for the diversity set update only when its mode is 011/100/101/110, and the mode is not directly related to the present invention, so a detailed description thereof will be omitted. Operations of steps 313 to 317 are equal to the operations in steps 215 to 219 of FIG 2, so a detailed description thereof will be omitted.

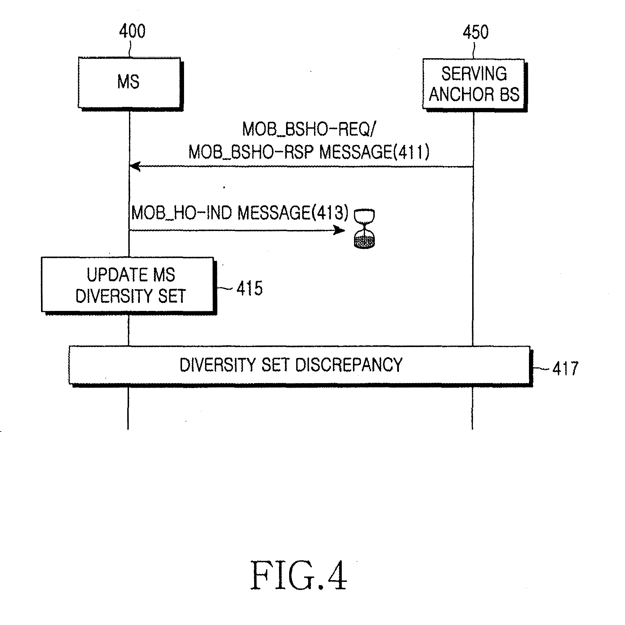

With reference to FIG 4, a description will now be made of occurrence of diversity set discrepancy during FBSS handover in a general IEEE 802.16e communication system.

When a serving anchor BS 450 transmits a MOB_BSHO-REQ message or a MOB_BSHO-RSP message to an MS 400 in step 411, the MS 400 determines whether to accept a BS diversity set, or the BS diversity set and a BS recommended set included in the MOB_BSHO-REQ message or the MOB_BSHO-RSP message. It is assumed that the serving anchor BS 450 transmits the MOB_BSHO-REQ message in the BS-initiated diversity set update process, and the serving anchor BS 450 transmits the MOB_BSHO-RSP message in the MS-initiated diversity set update process. Step 413 is equal to step 215 of FIG 2 and step 313 of FIG 3, so a detailed description thereof will be omitted.

However, even though the MS 400 has sent a MOB_HO-IND message to the serving anchor BS 450, the serving anchor BS 450 may fail to receive the MOB_HO-IND message. The MS 400 updates an MS diversity set according to the transmitting of the MOB_HO-IND message in step 415, because the MS 400 cannot recognize that the serving anchor BS 450 has failed to receive the MOB_HO-IND message. On the contrary, the serving anchor BS 450 cannot update a BS diversity set because the BS 450 has failed to receive the MOB_HO-IND message. Therefore, discrepancy between the MS diversity set of the MS 400 and the BS diversity set of the serving anchor BS 450 may occur in step 417. However, because the MS diversity set and the BS diversity set include only the active BSs to which the MS 400 can perform FBSS handover, the occurrence of discrepancy between the MS diversity set of the MS 400 and the BS diversity set of the serving anchor BS 450 may disable the FBSS handover. That is, when the active BS to which the MS 400 desires to perform an FBSS handover is not included in the BS diversity set of the serving anchor BS 450, the serving anchor BS 450 cannot support handover of the MS 400.

### SUMMARY OF THE INVENTION

An aspect of the present invention is to address at least the problems and/or disadvantages and to provide at least the advantages described below. Accordingly, an aspect of the present invention is to provide a system and method for updating a diversity set between a serving anchor BS and an MS in a communication system.

According to one aspect of the present invention, in a communication system, a BS transmits a BS diversity set, or the BS diversity set and a BS recommended set to a MS, and generates a temporary BS diversity set including BSs which are included in the BS diversity set and the BS recommended set, thereby enabling an FBSS handover even though a diversity set discrepancy between the BS and MS occurs.

### BRIEF DESCRIPTION OF THE DRAWINGS

The above and other objects, features and advantages of the present invention will become more apparent from the following detailed description when taken in conjunction with the accompanying drawings in which:
FIG 1 is a diagram illustrating a configuration of a general IEEE 802.16e communication system;
FIG 2 is a signaling diagram illustrating an MS-initiated diversity set update process in a general IEEE 802.16e communication system;
FIG 3 is a signaling diagram illustrating a BS-initiated diversity set update process in a general IEEE 802.16e communication system;
FIG 4 is a signaling diagram illustrating occurrence of diversity set discrepancy during FBSS handover in a general IEEE 802.16e communication system;
FIG 5 is a signaling diagram illustrating an MS-initiated diversity set update process in an IEEE 802.16 communication system according to the present invention;
FIG 6 is a signaling diagram illustrating a BS-initiated diversity set update process in an IEEE 802.16 communication system according to the present invention; and
FIG. 7 is a signaling diagram illustrating a timer-based diversity set update process in an IEEE 802.16 communication system according to the present invention.

### DETAILED DESCRIPTION OF PREFERRED EMBODIMENTS

Preferred embodiments of the present invention will now be described in detail with reference to the annexed drawings. In the following description, a detailed description of known functions and configurations incorporated herein has been omitted for clarity and conciseness.

The present invention provides a system and method for updating a diversity set between a serving anchor Base Station (BS) and a Mobile Station (MS) during handover in a communication system. For convenience, a handover will be assumed to be a Fast Base Station Switching (FBSS)-based handover, i.e. an FBSS handover, and the communication system will be assumed to be an Institute of Electrical and Electronics Engineers (IEEE) 802.16 communication system.

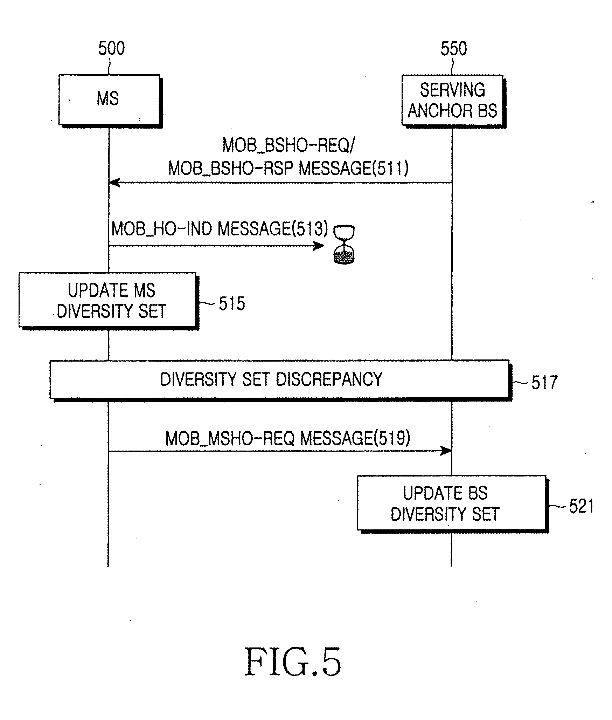

FIG 5 shows an MS-initiated diversity set update process in an IEEE 802.16 communication system according to the present invention. When a serving anchor BS 550 transmits a BS Handover Request (MOB_BSHO-REQ) message or a BS Handover Response (MOB_BSHO-RSP) message in step 511, an MS 500 determines whether to accept a BS diversity set, or the BS diversity set and a BS recommended set included in the MOB_BSHO-REQ message or the MOB_BSHO-RSP message. It is assumed that the serving anchor BS 550 transmits the MOB_BSHO-REQ message in the BS-initiated diversity set update process, and the serving anchor BS 550 transmits the MOB_BSHO-RSP message in the MS-initiated diversity set update process. In addition, the serving anchor BS 550 transmits the MOB_BSHO-RSP message to the MS 500 when the serving anchor BS 550 has received an MS Handover Request (MOB_MSHO-REQ) message that the MS 500 has sent as the serving anchor BS 550 determined a need for diversity set update. The serving anchor BS 550 transmits the MOB_BSHO-REQ message when the serving anchor BS 550 determines that there is a need for diversity set update. The operation in which the MS 500 and the serving anchor BS 550 determine that there is a need for diversity set update has been described above.

As described above, the BS diversity set of the serving anchor BS 550 is not updated until a Handover Indication (MOB_HO-IND) message is received from the MS 500. In FIG 5, therefore, the serving anchor BS 550 generates a temporary BS diversity set as the serving anchor BS 550 transmits the MOB_BSHO-REQ message or the MOB_BSHO-RSP message, thereby preventing an occurrence of discrepancy between the MS diversity set of the MS 500 and the BS diversity set of the serving anchor BS 550. The temporary BS diversity set can include all BSs included in both the BS diversity set and the BS recommended set.

Upon receipt of the MOB_BSHO-REQ message or the MOB_BSHO-RSP message, the MS 500 determines whether to accept a BS diversity set, or the BS diversity set and a BS recommended set included in the received MOB_BSHO-REQ message or MOB_BSHO-RSP message. The MS 500 transmits a MOB_HO-IND message including the determination result to the serving anchor BS 550 in step 513. The MOB_HO-IND message includes an MDHOFBSS_IND_TYPE field. The MS 500 can reflect the determination result through the MDHOFBSS_IND_TYPE field, and this has been described in step 215 of FIG 2. However, even though the MS 500 has sent a MOB_HO-IND message to the serving anchor BS 550, the serving anchor BS 550 may fail to receive the MOB_HO-IND message. The MS 500 updates an MS diversity set according to the transmitting of the MOB_HO-IND message in step 515, because the MS 500 cannot recognize that the serving anchor BS 550 has failed to receive the MOB_HO-IND message. On the contrary, the serving anchor BS 550 cannot update a BS diversity set because the BS 550 has failed to receive the MOB_HO-IND message. Therefore, discrepancy between the MS diversity set of the MS 500 and the BS diversity set of the serving anchor BS 550 may occur in step 517.

Meanwhile, when the MS 500 indicates through the MOB_HO-IND message that the MS 500 will reject the BS diversity set, or the BS diversity set and the BS recommended set, or the MS 500 will cancel the diversity set update process, the MS diversity set of the MS 500 becomes equal to the BS diversity set of the serving anchor BS 550. In addition, when the MS 500 indicates through the MOB_HO-IND message that the MS 500 will accept the BS diversity set, or the BS diversity set and the BS recommended set, the MS diversity set of the MS 500 is included in the temporary BS diversity set. Therefore, even though discrepancy between the MS diversity set of the MS 500 and the BS diversity set of the serving anchor BS 550 occurs, the MS diversity set of MS 500 is unconditionally included in the temporary BS diversity set, so the serving anchor BS 550 keeps information on the active BS to which the MS 500 desires to perform FBSS handover, thereby enabling the handover.

Thereafter, when the MS 500 determines that there is a need for diversity set update, the MS 500 transmits a MOB_MSHO-REQ message including an MS diversity set, or the MS diversity set and an MS recommended set, to the serving anchor BS 550 in step 519. Upon receipt of the MOB_MSHO-REQ message from the MS 500, the serving anchor BS 550 updates the BS diversity set in step 521, detecting the discrepancy between the BS diversity set of the serving anchor BS 550 itself and the MS diversity set of the MS 500. The serving anchor BS 550 updates the BS diversity set according to the MS diversity set included in the MOB_MSHO-REQ message. As the serving anchor BS 550 updates the BS diversity set in this manner, the BS 550 can coincide in the diversity set with the MS 500.

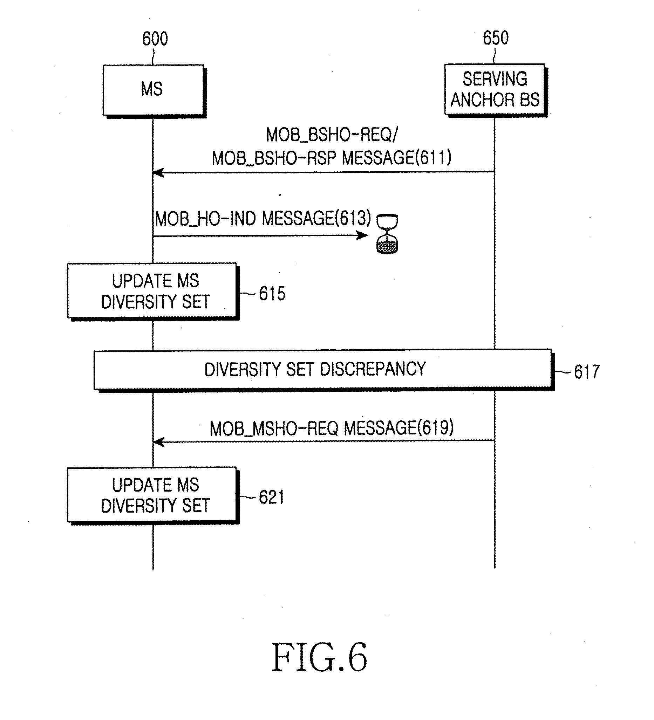

With reference to FIG 6, a description will now be made of a BS-initiated diversity set update process in an IEEE 802.16 communication system according to the present invention.

Operations of steps 611 to 613 are equal to the operations of steps 511 to 513 of FIG 5, so a detailed description thereof will be omitted. As described above, a BS diversity set of a serving anchor BS 650 is not updated until a MOB_HO-IND message is received from an MS 600. Therefore, the MS 600 generates an old MS diversity set as the MS 600 updates the MS diversity set, thereby preventing an occurrence of discrepancy between the MS diversity set of the MS 600 and the BS diversity set of the serving anchor BS 650. The old MS diversity set indicates a previous diversity set given when the MS 600 updates the MS diversity set.

However, even though the MS 600 has sent a MOB_HO-IND message to the serving anchor BS 650, the serving anchor BS 650 may fail to receive the MOB_HO-IND message. The MS 600 updates the MS diversity set according to the transmitting of the MOB_HO-IND in step 615, because the MS 600 cannot recognize that the serving anchor BS 650 has failed to receive MOB_HO-IND message. In addition, the MS 600 generates the old MS diversity set as well, as the MS 600 updates the MS diversity set. However, the serving anchor BS 650 cannot update the BS diversity set because the BS 650 has failed to receive the MOB_HO-IND message. Therefore, discrepancy between the MS diversity set of the MS 600 and the BS diversity set of the serving anchor BS 650 occurs in step 617.

Thereafter, when the serving anchor BS 650 determines again that there is a need for diversity set update, the serving anchor BS 650 transmits a MOB_BSHO-REQ message including the BS diversity set, or the BS diversity set and the BS recommended set to the MS 600 in step 619. Upon receipt of the MOB_BSHO-REQ message from the serving anchor BS 650, the MS 600 updates the MS diversity set in step 621, detecting the discrepancy between the MS diversity set of the MS 600 itself and the BS diversity set of the serving anchor BS 650. The MS 600 updates the old MS diversity set as an MS diversity set. As the MS 600 updates the MS diversity set in this manner, the MS 600 can coincide in the diversity set with the serving anchor BS 650.

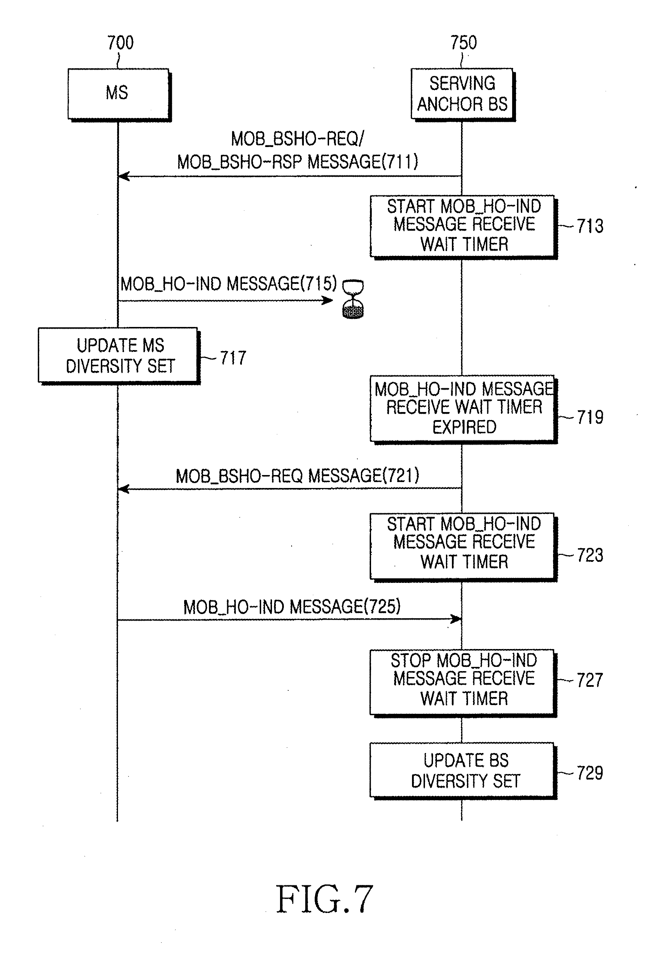

With reference to FIG 7, a description will now be made of a timer-based diversity set update process in an IEEE 802.16 communication system according to the present invention.

An operation of step 711 is equal to the operation of step 511 of FIG 5 and step 611 of FIG 6, so a detailed description will be omitted. After transmitting a MOB_BSHO-REQ message or a MOB_BSHO-RSP message, a serving anchor BS 750 starts a MOB_HO-IND message receive wait timer which is a timer for waiting for receipt of a MOB_HO-IND message, in step 713. However, even through an MS 700 has sent the MOB_HO-IND message to the serving anchor BS 750, the serving anchor BS 750 may fail to receive the MOB_HO-IND message in step 715. The MS 700 updates the MS diversity set according to the transmitting of the MOB_HO-IND message in step 717, because the MS 700 cannot recognize that the serving anchor BS 750 has failed to receive the MOB_HO-IND message.

Because the serving anchor BS 750 has failed to receive the MOB_HO-IND message, the MOB_HO-IND message receive wait timer expires in step 719. As the MOB_HO-IND message receive wait timer expires in this way, the serving anchor BS 750, detecting the possible occurrence of discrepancy in diversity set with the MS 700, transmits a MOB_BSHO-REQ message to the MS 700 in order to confirm diversity set update with the MS 700 in step 721. In the MOB_BSHO-REQ message, the mode is set to 0b111 (mode = 0b111), and the MOB_BSHO-REQ message is used for confirmation of the diversity set update only for mode = 0b111. A format of the MOB_BSHO-REQ message is shown in Table 1.

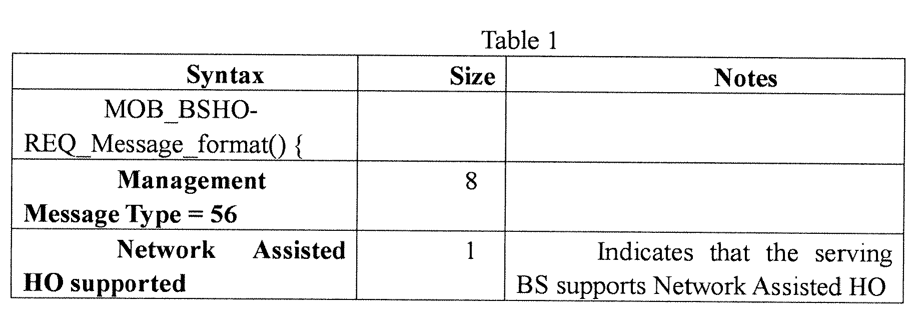

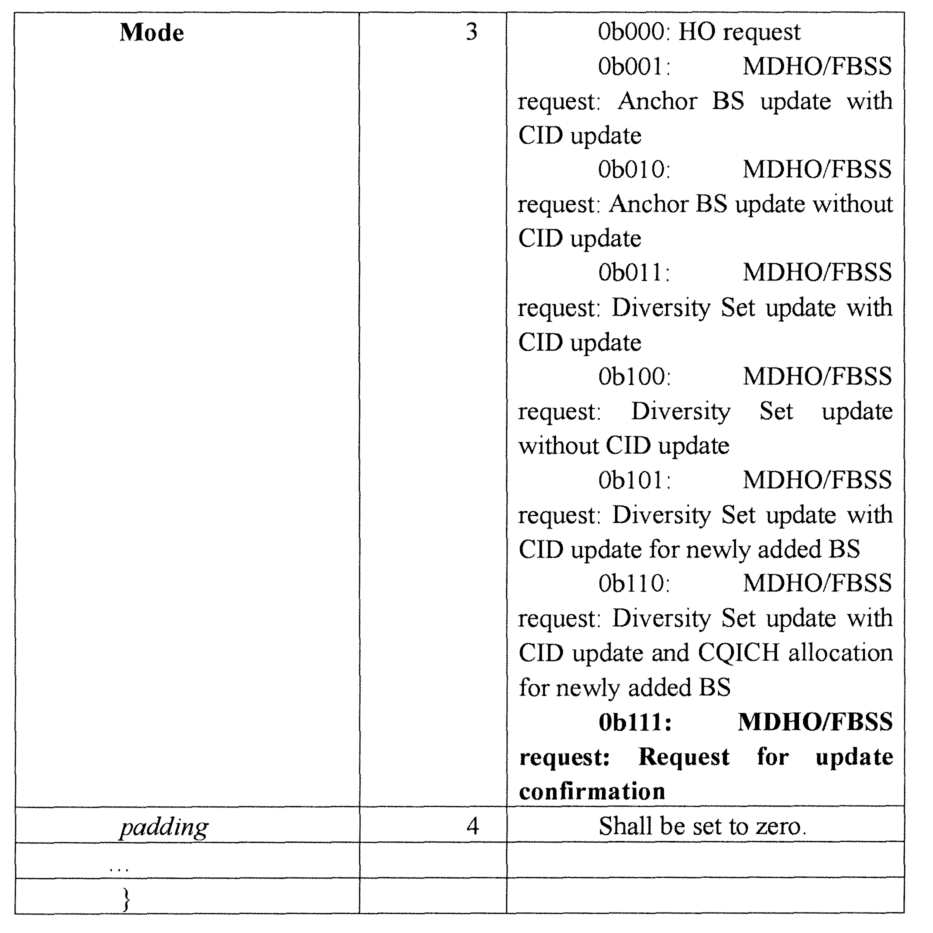

Among a plurality of Information Elements (IEs) included in the MOB_BSHO-REQ message shown in Table 1, IEs other than Mode IE are equal to IEs included in the MOB_BSHO-REQ message of the IEEE 802.16e communication system. As shown in Table 1, when a value of the Mode IE is set to 0b111, the MOB_BSHO-REQ message can be used for confirmation of the diversity set update.

After transmitting the MOB_BSHO-REQ message, the serving anchor BS 750 restarts the MOB_HO-IND message receive wait timer in step 723. Upon receipt of the MOB_BSHO-REQ message, the MS 700 transmits a MOB_HO-IND message to the serving anchor BS 750 in step 725. The MS 700 transmits the immediately previously sent MOB_HO-IND message. Upon receipt of the MOB_HO-IND message, the serving anchor BS 750 stops the MOB_HO-IND message receive wait timer in step 727, and updates the BS diversity set according to the MOB_HO-IND message in step 729. As the serving anchor BS 750 updates the BS diversity set in this manner, the BS 750 can coincide in the diversity set with the MS 700.

As can be understood from the foregoing description, the present invention prevents diversity set discrepancy during a diversity set update between a serving anchor BS and an MS in a communication system, thereby preventing an FBSS handover impossibility which may occur due to a diversity set discrepancy between the serving anchor BS and the MS during the FBSS handover. As a result, the present invention contributes to improvement of an entire QoS of the communication system.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for updating a diversity set of a Base Station (BS) in a communication system, the method comprising:
transmitting a BS diversity set, or the BS diversity set and a BS recommended set to a Mobile Station (MS); and
generating a temporary BS diversity set including BSs which are included in the BS diversity set and the BS recommended set.

2. The method of claim 1, further comprising:
determining whether the BS diversity set coincides with the MS diversity set upon receipt of a diversity set update request including an MS diversity set, or the MS diversity set and an MS recommended set from the MS; and
updating the BS diversity set as the MS diversity set when the BS diversity set does not coincide with the MS diversity set.

3. A method for updating a diversity set of a Mobile Station (MS) in a communication system, the method comprising:
updating an MS diversity set; and
generating a previous MS diversity set before the update as an old MS diversity set after updating the MS diversity set.

4. The method of claim 3, further comprising:
upon receipt of a diversity set update request including a Base Station (BS) diversity set, or the BS diversity set and a BS recommended set from a BS, determining whether the MS diversity set coincides with the BS diversity set; and
updating the MS diversity set as the old MS diversity set when the MS diversity set does not coincide with the BS diversity set.

5. A method for updating a diversity set of a Base Station (BS) in a communication system, the method comprising:
transmitting a BS diversity set, or the BS diversity set and a BS recommended set to a Mobile Station (MS);
transmitting a confirmation request for diversity set update of the MS to the MS, when information indicating whether the MS will accept the BS diversity set, or the BS diversity set and the BS recommended set is not received from the MS within a predetermined time; and
updating the BS diversity set according to the response upon receipt of a response to the confirmation request from the MS.

6. The method of claim 5, wherein the response is equal to the information.

7. A system for updating a diversity set in a communication system, the system comprising:
a Mobile Station (MS); and
a Base Station (BS) for transmitting a BS diversity set, or the BS diversity set and a BS recommended set to the MS, and generating a temporary BS diversity set including BSs which are included in the BS diversity set and the BS recommended set.

8. The system of claim 7, wherein the MS transmits a diversity set update request including an MS diversity set, or the MS diversity set and an MS recommended set to the BS.

9. The system of claim 8, wherein upon receipt of the diversity set update request from the MS, the BS determines whether the BS diversity set coincides with the MS diversity set, and updates the BS diversity set as the MS diversity set when the BS diversity set does not coincide with the MS diversity set.

10. A system for updating a diversity set in a communication system, the system comprising:
a Mobile Station (MS) for updating an MS diversity set, and generating a previous MS diversity set before the update as an old MS diversity set; and
a Base Station (BS).

11. The system of claim 10, wherein the BS transmits a diversity set update request including a BS diversity set, or the BS diversity set and a BS recommended set to the MS.

12. The system of claim 11, wherein upon receipt of the diversity set update request from the BS, the MS determines whether the MS diversity set coincides with the BS diversity set, and updates the MS diversity set as the old MS diversity set when the MS diversity set does not coincide with the BS diversity set.

13. A system for updating a diversity set in a communication system, the system comprising:
a Base Station (BS) for transmitting a BS diversity set, or the BS diversity set and a BS recommended set to a Mobile Station (MS), transmitting a confirmation request for a diversity set update of the MS to the MS when information indicating whether the MS will accept the BS diversity set, or the BS diversity set and the BS recommended set is not received from the MS within a predetermined time, and upon receipt of a response to the confirmation request from the MS, updating the BS diversity set according to the response; and
the MS for receiving the BS diversity set, or the BS diversity set and the BS recommended set from the BS, determining whether the MS will accept the BS diversity set, or the BS diversity set and the BS recommended set, transmitting information indicating the determination result to the BS, and upon receipt of the confirmation request for the diversity set update from the BS, transmitting a response to the diversity set update confirmation request to the BS.

14. The system of claim 13, wherein the response is equal to the information.
